# EUROPEAN PATENT SPECIFICATION

(11) **EP 3 739 608 B1**
(45) Date of publication and mention of the grant of the patent: **07.12.2022**
(21) Application number: 20183286.2
(22) Date of filing: 24.04.2019
(51) Int. Cl.: H01H 9/26, H02B 11/133

(54) **MECHANICAL INTERLOCK APPARATUS, PANEL ASSEMBLY AND OPERATION ASSEMBLY FOR ELECTRICAL DEVICE AND ELECTRICAL DEVICE**
MECHANISCHE VERRIEGELUNGSVORRICHTUNG, PLATTENANORDNUNG UND BETÄTIGUNGSANORDNUNG FÜR EINE ELEKTRISCHE VORRICHTUNG UND ELEKTRISCHE VORRICHTUNG
APPAREIL DE VERROUILLAGE MÉCANIQUE, ENSEMBLE DE PANNEAU ET ENSEMBLE DE FONCTIONNEMENT POUR DISPOSITIF ÉLECTRIQUE ET DISPOSITIF ÉLECTRIQUE

(30) Priority: 25.04.2018 CN 201820603664 U
(43) Date of publication of application: 18.11.2020
(62) Divisional of application: 19170906.2
(73) Proprietor: ABB S.p.A., 20124 Milano (IT)
(72) Inventor: Wu, YiEr, Jiangmen, Guangdong 529100 (CN); Ren, Jiancheng, Jiangmen, Guangdong 529100 (CN); Li, Jianwei, Jiangmen, Guangdong 529000 (CN)
(74) Representative: Zimmermann & Partner Patentanwälte mbB

(56) References cited:
- CN-B- 104 952 654
- FR-A1- 2 901 632
- US-A- 3 778 633

## Description

### FIELD

Embodiments of the present disclosure generally relate to an electrical device, and more specifically to a panel assembly and an operation assembly for the electrical device

### BACKGROUND

In power supply systems, especially low-voltage power distribution systems (such as factories, schools, hospitals, etc.), dual power supplies (primary power supply and backup power supply) are usually used to ensure reliability of the power required for production or daily work. However, it is impossible for two power supply circuits to supply power at the same time, otherwise, the circuit will be short-circuited, causing serious safety accidents. Therefore, electrical devices such as circuit breakers/contactors/isolating switches which are respectively coupled to the two power supply circuits usually employ dual protective measures, namely, an electrical and mechanical interlock apparatus, to ensure the reliability and safety of the circuit.

At present, the mechanical interlock apparatus on the market usually employ a lever/linkage mechanism as interlock means. Usually, the arm of force of the lever/length of the linkage needs to be adjusted by the user. Length of linkage must be rigorously adjusted to ensure the reliability of the interlock. However, due to limited space, the arm of force of the lever/length of the linkage can only be adjusted by visual inspection, causing the accuracy cannot be guaranteed. In addition, such interlock apparatus has many parts and complicated on-site adjustment, resulting in a low reliability of the mechanical interlock apparatus.

In addition, a front panel is usually used on an electrical device such as a circuit breaker as an operating or protective mechanism to ensure safe use of the electrical device. However, the current front panel is mounted with screws, the number of which is large. Moreover, the front cover of the handle needs to be detached before installation and to be reinstalled after the screws are tightened. The installation process is complicated, and the parts therein are prone to be damaged during detachment. Furthermore, in the front panel, the gap between the mechanism and the switch is large, usually 2.5 mm or more, failing to reliably prevent small objects from entering the switch, and thus causing a risk of safety and switch failure.

When an electrical device such as a circuit breaker is installed in a switch cabinet, in order to enable operation of the electrical device from outside the switch cabinet, the electrical device is usually operated by using lengthened control handles on the front side or lateral side of the switch cabinet which are coupled to the electrical device in the switch cabinet. Sometimes due to design and installation requirements, the lengthened control handles on the front side and lateral side of the switch cabinet need to be interchanged. However, due to the absence of an independent conversion transmission mechanism, the lengthened control handles need to be customized at the manufacturer upon interchange, causing the interchange cannot be implemented on site. This affects the progress and convenience of the design and installation. In addition, the conventional solutions of lengthened rotation on the lateral side cannot realize the direct interchange between left and right side lengthened control handles. FR2901632A1 relates to an earth leakage circuit breaker applied to a low voltage distribution system, and more specifically, a mega test switch for separating an earth leakage detection circuit from a main circuit when mounted on a circuit breaker and performing an insulation / withstand voltage test. CN 104952654B relates to an interlocking transmission device of an automatic change-over switch of double circuit breakers. The interlocking transmission device comprises a fixing plate, wherein a motor and a cam rotary table are arranged on the fixing plate; rocker arms are arranged on the fixing plate and on two sides of the cam rotary table respectively; the middle parts of the rocker arms are hinged with the fixing plate. US 3 778 633 A provides an automatic electric power source transfer apparatus utilizing commercially available compact high interrupting capacity, and current-withstandability switching devices, and particularly molded case circuit breakers, with or without automatic opening means.

### SUMMARY

In accordance with the invention, a panel assembly for an electrical device as set forth in claim 1 is provided. Further embodiments are inter alia disclosed in the dependent claims. The following embodiments cover various modifications which are possible to be made, without departing from the scope of the present invention, which is defined by the appended claims.

A first aspect of the present disclosure discloses a mechanical interlock apparatus for an electrical device. The mechanical interlock apparatus comprises a first interlocking lever and second interlocking lever which are movable, arranged to be spaced apart by a predetermined distance and coupled to a first electrical device and a second electrical device, respectively; a pivoting mechanism operable to rotate about an axis; a first driving pin and a second driving pin arranged at both ends of the pivoting mechanism and on both sides of the axis respectively, and operable to slide in a direction perpendicular to a moving direction of the first interlocking lever or the second interlocking lever and the axis, wherein the first driving pin and the second driving pin being coupled to the first interlocking lever and the second interlocking lever, respectively, to cause the first interlocking lever and the second interlocking lever to move in opposite directions respectively in response to the first electrical device being closed, to prevent the second electrical device from being closed.

In some embodiments, the mechanical interlock apparatus further comprises a first slider and a second slider arranged to be coupled to the first interlocking lever and the second interlocking lever, respectively, and operable to move in synchronization, and each of the first slider and the second slider respectively comprises a sliding groove extending perpendicular to the axis to allow respective one of the first driving pin and the second driving pin to slide therein.

In some embodiments, the mechanical interlock apparatus further comprises a first guide pin and a second guide pin to provide guidance for sliding of the first slider and the second slider, respectively.

In some embodiments, the pivoting mechanism comprises a first pivoting member, a second pivoting member, and a linkage shaft arranged between the first pivoting member and the second pivoting member for connecting the first pivoting member with the second pivoting member.

In some embodiments, wherein the linkage shaft comprises: a pair of end shafts arranged to be coupled to the first pivoting member and the second pivoting member, respectively; a fastening bushing arranged between the pair of end shafts and adapted to receive at least a portion of the end shafts.

In some embodiments, the mechanical interlock apparatus further comprises a first mount and a second mount which for pivotally arranging the first pivoting member and the second pivoting member, respectively.

In some embodiments, the mechanical interlock apparatus further comprises a base comprising a first and a second side arranged opposite to each other; wherein the first electrical device and the second electrical device are mounted on the first side, and the first pivoting member, the second pivoting member and the linkage shaft are mounted on the second side, and the first and second interlocking levers protrude from the second side through the base to the first side.

A second aspect of the present disclosure discloses an electrical device including at least one of a circuit breaker, contactors and an isolating switch, and the mechanical interlock apparatus described above.

A third aspect of the present disclosure discloses a panel assembly for an electrical device. According to the invention, the panel assembly comprises: a panel base adapted to be attached to the electrical device and comprising a receiving groove and a limiting hook; and a panel cover comprising a hanging hook and a limiting block, the panel cover being operable to be pivotally coupled to the panel base by plugging the hanging hook into the receiving groove, and the limiting block being operable to be limited by the limiting hook to mount the panel cover on the panel base.

In some embodiments, wherein the panel base further comprises a bottom plate and a spring arranged between the bottom plate and the limiting hook, wherein the limiting hook is operable to be pushed by the limiting block to slide and return under an action of the spring in case where the limiting block enters the limiting hook.

In some embodiments, wherein the panel cover further comprises: a cover housing comprising side walls, the limiting block and the hanging hook being respectively disposed inside the side walls which are perpendicular to each other; a sliding slotted plate arranged within the cover housing and comprising a through slot for receiving a handle of the electrical device, the sliding slotted plate being operable to move relative to the cover housing with a swing of the handle; and a sealing member arranged between the sliding slotted plate and the side wall along a moving direction of the sliding slotted plate and the sealing member protruding from the cover housing to contact the panel base to provide sealing when the panel cover is mounted on the panel base.

In some embodiments, the panel base further comprises a first limiting member; and the sliding slotted plate further comprises a second limiting member arranged to slide with the sliding slotted plate, such that the second limiting member can be blocked by the first limiting member in case where the electrical device is closed.

In some embodiments, the sealing member is of a zigzagged shape in the moving direction.

A fourth aspect of the present disclosure discloses an operation assembly for operating an electrical device. The operation assembly comprises an input member operable to rotate about a first axis; a rotatable arm arranged to protrude from the input member parallel to the first axis and operable to rotate about the first axis along with the input member; a guide block pivotally arranged on the rotatable arm and operable to rotate about the first axis in response to a rotation of the rotatable arm, and the guide block comprising a guide groove extending parallel to the first axis; and an output member operable to rotate about a pivot shaft and coupled to the electrical device, and the output member comprising a guide pin extending parallel to the pivot shaft; the guide pin being slidably arranged within the guide groove, wherein the pivot shaft is perpendicular to the first axis.

In some embodiments, the operation assembly further comprises a pivot frame adapted to pivotally receive the rotatable arm, and the pivot frame comprising a pivot hole to receive the pivot shaft of the output member and an arc-shaped guide slot arranged with a center thereof being located on an axis of the pivot shaft, and the guide pin being arranged within the guide groove through the arc-shaped guide slot.

In some embodiments, the pivot frame further comprises a guide portion arranged to extend parallel to the pivot shaft; and the operation assembly further comprises an operation cover coupled to the pivot frame and adapted to receive the input member; and a housing operable to be arranged outside the pivot frame and to be coupled to the operation cover by sliding along the guide portion.

In some embodiments, the operation assembly further comprises a trip spring arranged between the input member and the operation cover to return the input member.

In some embodiments, the operation assembly further comprises a control handle coupled to the input member and operable to drive the input member to rotate about the first axis.

In some embodiments, the output member is coupled to the electrical device via an indirect operation member.

Further features of the present disclosure will be made apparent through the following descriptions of example embodiments with reference to figures.

It should be appreciated that Summary of the Invention is not intended to identify key or important features of embodiments of the present disclosure, without suggesting any limitations as to the scope of the present disclosure. Other features of the present disclosure will be made apparent through the following depictions.

### BRIEF DESCRIPTION OF THE DRAWINGS

Through the following detailed description with reference to the accompanying drawings, the above and other objectives, features and advantages of example embodiments disclosed herein will become more comprehensible. In the drawings, a plurality of embodiments of the present disclosure will be illustrated in an exemplary and non-limiting manner, wherein:
FIG. 1 illustrates a perspective view of a mechanical interlock apparatus for an electrical device according to example embodiments of the present disclosure;
FIG. 2 illustrates a perspective view of a mechanical interlock apparatus for an electrical device according to example embodiments of the present disclosure, as viewed from a second side;
FIG. 3 illustrates a perspective view of a mechanical interlock apparatus for an electrical device in which the electrical device is mounted to a first side of a mechanical interlock apparatus, according to example embodiments of the present disclosure;
FIG. 4 illustrates a side cross-sectional view of a mechanical interlock apparatus for an electrical device according to example embodiments of the present disclosure;
FIG. 5 illustrates a perspective view of an interlocking lever, a pivoting member, and a slider of a mechanical interlock apparatus for an electrical device according to example embodiments of the present disclosure;
FIG. 6 illustrates a perspective view of a panel assembly mounted on an electrical device according to the present invention;
FIG. 7 illustrates a side cross-sectional view of a panel assembly according to the present invention;
FIG. 8 illustrates a side view of a panel assembly according the present invention;
FIG. 9 illustrates a perspective view of a panel base of a panel assembly according to the present invention;
FIG. 10 illustrates a perspective view of a panel cover of a panel assembly according to the present invention;
FIG. 11 illustrates a perspective view of an operation assembly according to example embodiments of the present disclosure;
FIG. 12 illustrates a perspective view of an operation assembly whose housing is removed and partial parts are cut off to facilitate display, according to example embodiments of the present disclosure;
FIG. 13 illustrates a perspective view of the operation assembly whose housing is removed according to example embodiments of the present disclosure;
FIG. 14 illustrates an exploded view of an operation assembly according to example embodiments of the present disclosure;
FIG. 15 illustrates an exploded view of an operation assembly in an assembled state, according to example embodiments of the present disclosure; and
FIG. 16 illustrates a perspective view of an operation assembly in an assembled state, according to example embodiments of the present disclosure.

### DETAILED DESCRIPTION

Principles of the present disclosure will now be described with reference to various example embodiments illustrated in the drawings. It should be appreciated that the depiction of these embodiments is only to enable those skilled in the art to better understand and further implement the present invention, without suggesting any limitations as to the scope of the present invention in any manner. It is noted that wherever practicable similar or like reference numbers may be used in the figures, and may indicates similar or like functionality. One skilled in the art will readily recognize from the following description that alternative embodiments of the structures and methods illustrated herein may be employed without departing from the scope of the present invention, as defined by the appended claims.

As used herein, the term "comprises" and its variants are to be read as open terms that mean "comprises, but is not limited to." The term "based on" is to be read as "based at least in part on." The term "one implementation" and "an implementation" are to be read as "at least one implementation." The term "another implementation" is to be read as "at least one other implementation."

The conventional mechanical interlock apparatus for a low-voltage electrical device such as a circuit breaker, contactors or an isolating switch usually employs a lever/linkage mechanism. In order to meet the needs for distance between electrical devices, such a mechanism requires the user to adjust the arm of force of the lever/length of the linkage before installing the electrical device. A high degree of precision is required for the arm of force of the lever/length of the linkage to ensure the reliability of interlock of the electrical devices connected using such mechanism.

However, due to space limitations, it is difficult to adjust the arm of force of the lever/length of the linkage by using a measuring tool. Therefore, the adjustment of the arm of force of the lever/length of linkage in the current mechanical interlock apparatus can only be performed by observing with the user's eyes. The precision required for arm of force of the lever/length of linkage is difficult to guarantee, resulting in a substantially reduced reliability of the mechanical interlock apparatus. In addition, the current mechanical interlock apparatus has many parts, and it is very difficult to be installed and adjusted on site, thereby reducing work efficiency and user experience.

A first aspect of embodiments of the present disclosure provides a mechanical interlock apparatus 100 for an electrical device 200. The mechanical interlock apparatus 100 is simple in structure, needn't be adjusted by the user upon installation, significantly improving the reliability of the mechanical interlock apparatus 100 and user experience.

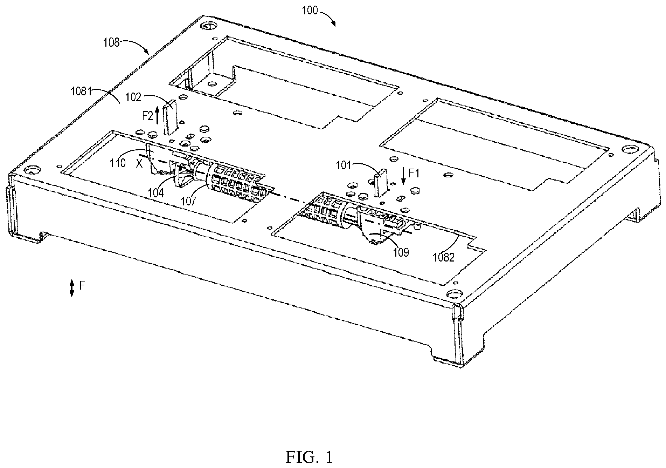

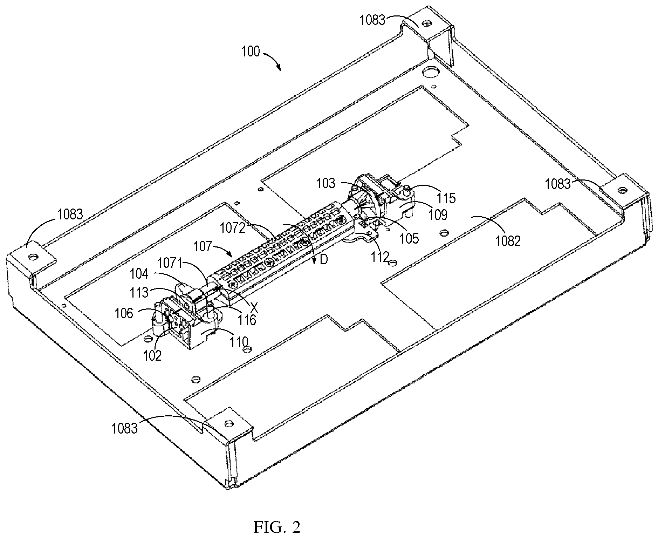

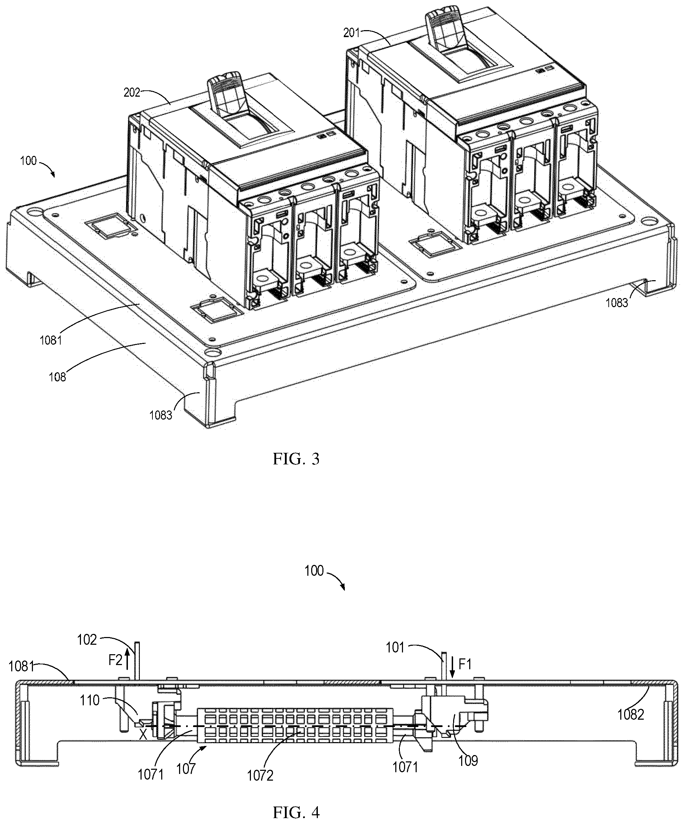

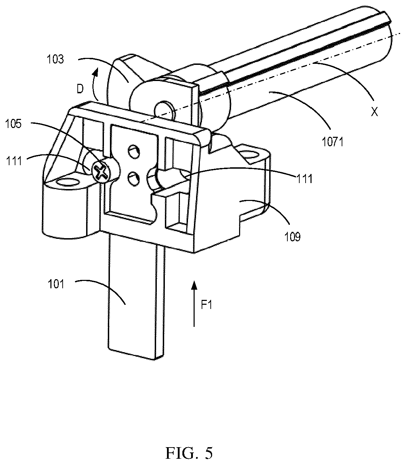

An improvement of the mechanical interlock apparatus 100 according to example embodiments of the present disclosure will be described in detail below with reference to FIGS. 1-5. FIG. 1 illustrates a perspective view of a mechanical interlock apparatus 100 for an electrical device 200 according to example embodiments of the present disclosure; FIG. 2 illustrates a perspective view of the mechanical interlock apparatus 100 viewed from a second side 1082; FIG. 3 illustrates a perspective view of the mechanical interlock apparatus 100, wherein the electrical device 200 is mounted to a first side 1081 of the mechanical interlock apparatus 100; FIG. 4 illustrates a side cross-sectional view of the mechanical interlock apparatus 100; and FIG. 5 illustrates a perspective view of an interlocking lever, a pivoting member, and a slider of the mechanical interlock apparatus 100.

As shown in FIGS. 1 and 2, in general, a mechanical interlock apparatus device 100 according to embodiments of the present disclosure comprises an interlocking lever, a pivoting mechanism, and a driving pin. The interlocking lever and the driving pin are used in pairs. For ease of discussion, the paired interlocking levers are hereinafter referred to as a first interlocking lever 101 and a second interlocking lever 102, respectively, and the paired driving pins are referred to as a first driving pin 105 and a second driving pin 106, respectively.

The first interlocking lever 101 and the second interlocking lever 102 are arranged at a predetermined distance apart to be respectively coupled to two electrical devices that need to be interlocked (for ease of discussion, the two electrical devices are hereinafter referred to as a first electrical device 201 and a second electrical device 202, respectively; see FIG. 3). The predetermined distance may be set according to the size of the first electrical device 201 and the second electrical device 202 that need to be set and according to the distance therebetween. It should be understood that the above-described components are described using "first" and "second", respectively, merely for convenience of description and do not represent a prioritization. The functions and roles of the various "first" and "second" components described above are interchangeable. This will not be described in detail any longer below.

The first interlocking lever 101 or the second interlocking lever 102 is movable in a moving direction F in response to being closed of the first electrical device 201 or the second electrical device 202 to which the first or second interlocking lever is coupled. The function that movement of the interlocking lever in the moving direction F is enabled by closing the electrical device may be achieved by the interlocking lever in cooperation with corresponding components in the electrical device. For example, the first interlocking lever 101 or the second interlocking lever 102 may be plugged into the first electrical device 201 or the second electrical device 202, respectively. In response to the first electrical device 201 or the second electrical device 202 being closed, the mechanism therein is movable to press the interlocking lever coupled thereto to move in the first direction F1.

It should be understood that the embodiments where the movement of the interlocking lever caused by closing the electrical device is achieved by the above-described structure is merely for illustration, without suggesting any limitations as to the scope of the present disclosure. It is also possible to implement the above functions by any other suitable arrangements or structures. For example, in some embodiments, the above functions may be implemented by a suitable external device or driving device between the electrical device and the interlocking lever. In addition, "close" here may mean that a main circuit of the electrical device is turned on.

As shown in FIG. 2, the pivoting mechanism is arranged to be rotatable in the same direction D about an axis X. In some embodiments, the pivoting mechanism means that a first pivoting member 103 and a second pivoting member 104 may be connected with each other by a suitable connector, as will be further explained below. In some embodiments, the pivoting mechanism may also mean that the first pivoting member 103 and the second pivoting member 104 are formed integrally.

The first driving pin 105 and the second driving pin 106 are respectively arranged at both ends of the pivoting mechanism and are respectively located on both sides of the axis X, as shown in FIGS. 1 and 2. This enables the first driving pin 105 and the second driving pin 106 to slide in a direction perpendicular to the axis X and the moving direction F when the first driving pin 105 and second driving pin 106 rotate about the axis X with the first pivoting member 103 and second pivoting member 104. That is, the moving directions of the first driving pin 105 and the second driving pin 106 are substantially perpendicular to a plane formed by the axis X and the moving direction F.

The first driving pin 105 and the second driving pin 106 are coupled to the first interlocking lever 101 and the second interlocking lever 102, respectively, in a suitable manner such that the first interlocking level 101 coupled thereto is enabled to move in a direction (hereinafter referred to as a first direction F1 for ease of discussion). In this way, the first pivoting member 103 and the second pivoting member 104 are driven to rotate to drive the second interlocking lever 102 to move toward a second direction F2 opposite to the first direction F1, in response to, for example, the first electrical device 201 being closed. The movement of the second interlocking lever 102 towards the second direction F2 can prevent the second electrical device 202 from being closed.

With the above simple structures, the interlocking of the first electrical device 201 and the second electrical device 202 is achieved. That is, in case where the first electrical device 201 is closed, the second electrical device 202 cannot be closed. This effectively avoids adverse effects on the circuit and the load when the two electrical devices are closed at the same time. Furthermore, unlike conventional linkage/lever interlocks, the above functions are achieved by means of pivoting members, and the size thereof needn't to be adjusted any more to allow the electrical device to be mounted thereon, resulting in a more convenient installation, and thus the mechanical interlock apparatus can be used more stably and reliably.

It should be understood that the mechanical interlock apparatus 100 according to the present disclosure may be applied to any suitable electrical devices, for example comprising, but not limited to, a circuit breaker, contactors, an isolating switch, or any other electrical devices that cannot be simultaneously closed. The mechanical interlock apparatus 100 can be used as long as it can satisfy the following situation: the interlocking lever of one of the electrical devices is enabled to move in any suitable manner when one electrical device is closed, and the moving direction of the other interlocking lever can prevent the other electrical device from being closed.

As shown in FIGS. 2 and 3, in some embodiments, the mechanical interlock apparatus 100 further comprises a base 108. The base 108 may be of a plate-like structure, wherein the first electrical device 201 and the second electrical device 202 are arranged on one side (referred to as a first side 1081 for ease of discussion) of the base 108, the first pivoting member 103 and the second pivoting member 104 are arranged on the opposite side (referred to as a second side 1082). The first interlocking lever 101 and the second interlocking lever 102 protrude from the second side 1082 through the base 108 towards the first side 1081, respectively, to facilitate coupling with the first electrical device 201 and the second electrical device 202.

The base 108 may be mounted to a switch cabinet or other corresponding structure by any suitable means. For example, the base 108 may also comprise legs 1083 that protrude towards the second side 1082, as shown in FIGS. 2 and 3. The legs 1083 may have suitable mounting structures (e.g., threaded holes or through holes) to facilitate mounting of the base 108. In some embodiments, the base 108 may be integrally formed by any suitable means, such as by integrally stamping. In some embodiments, the base 108 may also be formed by assembling.

It should be understood that the above-described embodiments about the base 108 are merely for illustration, without suggesting any limitations as to the scope of the present disclosure, and any other suitable mechanisms or arrangements are possible. For example, in some embodiments, the base 108 may also be a plate-like structure without legs, which may be mounted in the switch cabinet by being received in a suitably-sized recess.

As described above, the pivoting mechanism comprises a first pivoting member 103 and a second pivoting member 104. In some embodiments, in order to more conveniently adjust the distance between the two interlocking levers, a linkage shaft 107 may be disposed between the first pivoting member 103 and the second pivoting member 104, as shown in FIGS. 2 and 4. The linkage shaft 107 is arranged on the second side 1082 with an axis thereof being disposed along the axis X. In this way, by replacing the linkage shaft 107 of a different length, it is possible to conveniently adjust the distance between the two interlocking levers to improve the versatility of the mechanical interlock apparatus 100.

As shown in FIG. 2, in some embodiments, the linkage shaft 107 may comprise a pair of end shafts 1071 coupled to the first pivoting member 103 and the second pivoting member 104, respectively, and a fastening bushing 1071 arranged between the end shafts 1071. The end shafts 1071 are respectively inserted into the holes at both ends of the fastening bushing 1072 and tightly clamped by reducing an inner diameter of the bore of the fastening bushing 1071 in a proper fastening manner, e.g., using a bolt or screw. In this way, the mechanical interlock apparatus 100 can be assembled more easily, and the length of the linkage shaft 107 can also be adjusted more conveniently. In some embodiments, the linkage shaft 1071 may be integrally formed with the pivoting member. In some embodiments, the linkage shaft 1071 may be mounted on the pivoting member along the axis X by a suitable fastening means.

It should be understood that the above-described embodiment regarding the linkage shaft 107 is merely for illustration, without suggesting any limitations as to the scope of the present disclosure. Any other suitable structures or arrangements are possible. For example, in some embodiments, the linkage shaft 107 may also be integrally formed, which can result in higher structural stability.

As shown in FIGS. 2 and 5, in some embodiments, the first interlocking lever 101 and the second interlocking lever 102 may respectively be coupled to the first driving pin 105 and the second driving pin 106 via sliders (referred to as a first slider 109 and a second slider 110 respectively for ease of discussion). The first slider 109 and the second slider 110 may respectively have sliding grooves 111 extending perpendicular to the axis X to accommodate the first driving pin 105 and the second driving pin 106, respectively. The first slider 109 and the second slider 110 are movable with the first interlocking lever 101 and the second interlocking lever 102, respectively.

With the above structures, when moving with the interlocking levers, the first slider 109 and the second slider 110 can drive the first driving pin 105 and the second driving pin 106 to rotate about the axis X, thereby realizing the movement of the first interlocking lever 101 and the second interlocking lever 102 in different directions. It should be understood that the above-described embodiments for coupling the driving pins to the interlocking levers with the sliders are merely for illustration, without suggesting any limitation as to the scope of the present disclosure. Any other structures or arrangements that enable the above functions are possible. For example, in some embodiments, the sliding grooves may be disposed directly on the first slider 109 and the second slider 110.

In some embodiments, the mechanical interlock apparatus 100 may also have a first mount 112 and a second mount 113 which are arranged on the second side 1082 and used to mount the first pivoting member 103 and the second pivoting member 104, respectively. In some embodiments, as shown in FIG. 2, the mechanical interlock apparatus 100 may further comprise a first guide pin 115 and a second guide pin 116 which respectively run through holes on the first slider 109 and the second slider 110, to provide guidance for the movement of the first slider 109 and the second slider 110.

The mechanical interlock apparatus 100 for the electrical device 200 has been set forth above by way of specific embodiments. A panel assembly may also be currently used on the electrical device 200 such as a circuit breaker to further enhance the safety of electrical device. However, the conventional panel assembly needs to be installed with screws, a number of which is large. Moreover, a front cover of the handle needs to be detached before installation, and to be reinstalled after the screws are tightened. The installation process is complicated, and the parts therein are prone to be damaged during the detachment. Moreover, the gaps between the mechanisms in the front panel are large, usually 2.5 mm or more, failing to reliably prevent small objects from entering the electrical device, and resulting in a risk of safety and switch failure. In addition, the conventional panel assembly may be detached or installed while the electrical device is closed, which is likely to endanger the user's personal safety.

According to a second aspect of the present disclosure, a panel assembly 300 for an electrical device 200 is provided to enable convenient installation and increase the degree of protection and safety.

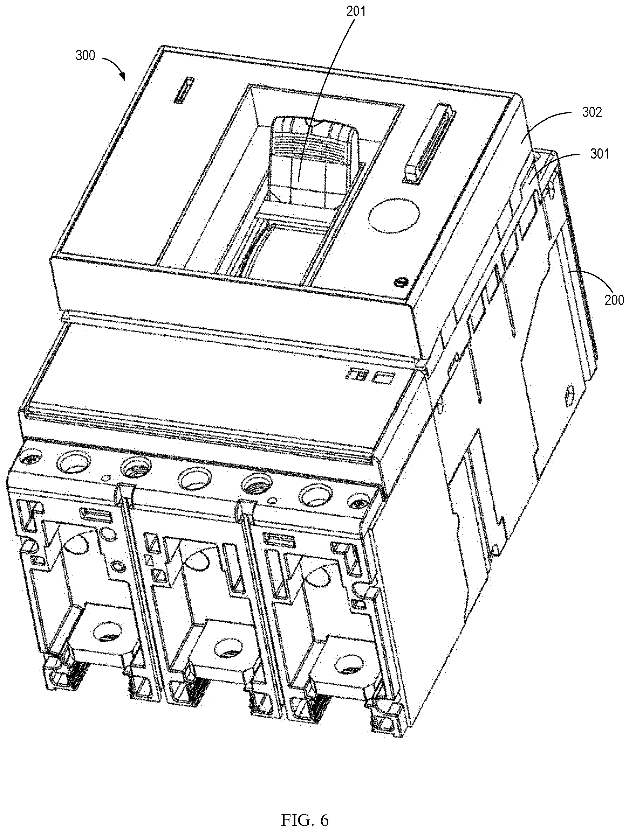

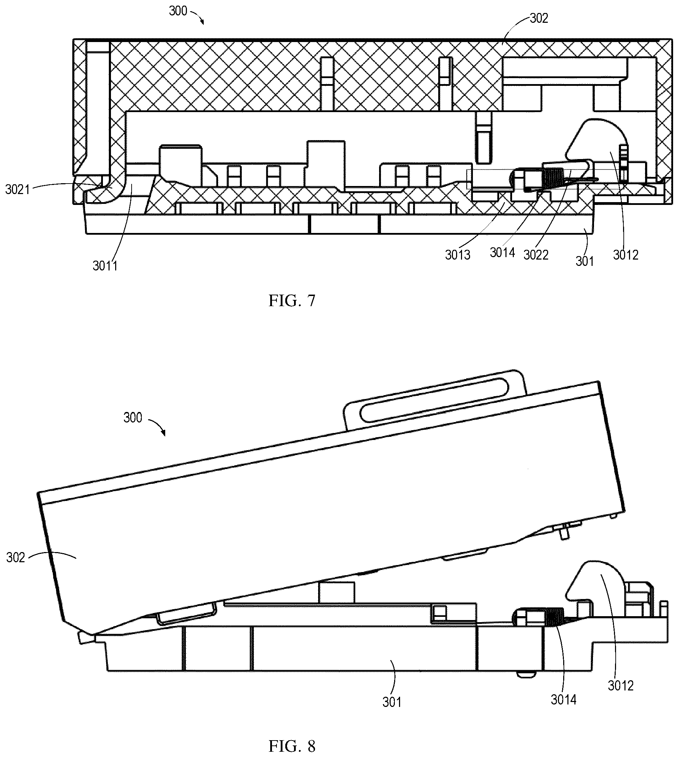

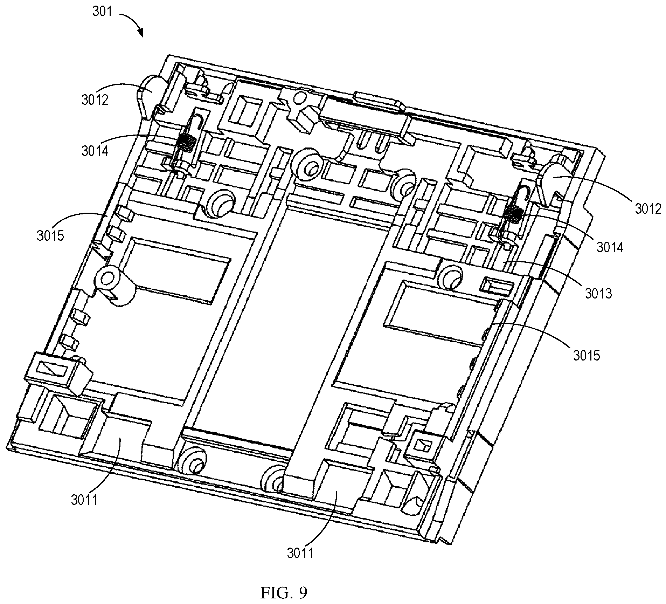

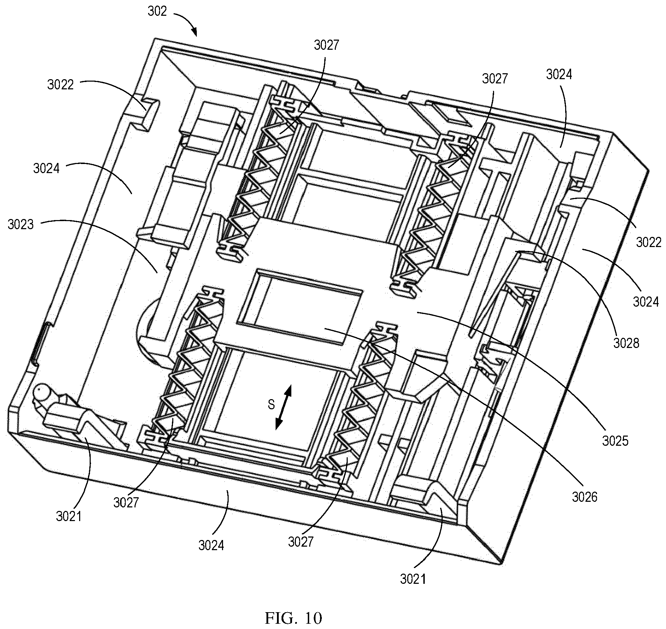

An improvement of the panel assembly 300 according to example embodiments of the present disclosure will be described in detail below with reference to FIGS. 6 to 10. FIG. 6 illustrates a perspective view of the panel assembly 300 mounted on the electrical device 100; FIG. 7 illustrates a side cross-sectional view of the panel assembly 300; FIG. 8 illustrates a side view of the panel assembly 300; FIG. 9 illustrates a perspective view of a panel base 301 of the panel assembly 300; and FIG. 10 illustrates a perspective view of a panel cover 302 of the panel assembly 300.

As shown in FIGS. 6, 7, and 8, in general, the panel assembly 300 according to the present invention comprises a panel base 301 and a panel cover 302. The panel base 301 is coupled to the electrical device 200 in a proper manner, such as a threaded connection or snap-fit connection. A receiving groove 3011 and a limiting hook 3012 are disposed on a side of the panel base 301 away from the electrical device 200. The panel cover 302 comprises a hanging hook 3021 and a limiting block 3022.

With the above structures, the panel cover 302 may be pivotally coupled to the panel base 301 by plugging the hanging hook 3021 of the panel cover 302 into the receiving groove 3011 at an appropriate angle. Then the panel cover 302 is further pushed towards the panel base 301, enabling the limiting block 3022 to be restrained by the limiting hook 3012 to thereby mount the panel cover 302 on the panel base 301. It may be appreciated that, compared to the conventional panel assembly, the installation of the panel cover 302 and the panel base 301 is completed without fasteners such as screws, and the installation process is faster and easier. Further, as shown in FIG. 6, there may be through slots at corresponding locations of the panel base 301 and the panel cover 302 for the handle 201 of the electrical device 200 to pass through. In this way, the handle 201 may be operated from the outside of the panel assembly 300.

In some embodiments, as shown in FIGS. 7, 8, and 9, the panel base 301 comprises a bottom plate 3013 and a spring 3014. The spring 3014 is arranged between the bottom plate 3013 and the limiting hook 3012. During the process of the panel cover 302 being pressed towards the panel base 301, the limiting hook 3012 is pushed by the limiting block 3022 to slide against the elastic force of the spring 3014. When the limiting block 3022 moves further into the hook of the limiting hook 3012, the spring 3014 provides a resilient force to return the limiting hook 3012 and thereby restrain the limiting block 3022 within the limiting hook 3012.

It should be understood that the above embodiment where the restraint is achieved by the limiting block 3022 cooperating with the limiting hook 3012 is for illustration, without suggesting any limitations as to the scope of the present disclosure. Any other suitable structures or arrangements are also possible. For example, in some embodiments, a hook portion of the limiting hook 3012 may be configured to be resiliently deformable such that during the process of the panel cover 302 being pressed towards the panel base 301, the limiting block 3022 can enable the limiting hook 3012 to be deformed and reset after entry into the interior of the hook, to thereby restrain the limiting block 3022 and the panel cover 302.

As shown in FIG. 10, in some embodiments, the panel cover 302 comprises a cover housing 3023, a sliding slotted plate 3025 and a sealing member 3027. The housing has four side walls 3024 to enclose an interior space with a substantially square configuration. The limiting block 3022 and the hanging hook 3021 are located inside the side wall 3024 or disposed in the interior space adjacent to the side wall 3024. The limiting block 3022 and the hanging hook 3021 may be integrally formed on the mutually perpendicular side walls 3024, or may be fastened to the side wall 3024 or mounted adjacent to the side wall 3024 with a suitable structure.

The sliding slotted plate 3025 is movably disposed in the inner space formed by the side wall 3024, i.e., the inner space of the cover housing 3023. A through slot 3026 for the handle 201 of the electric device 200 to pass through is provided on the sliding slotted plate 3025 and operable to move relative to the cover housing 3023 with swing of the handle 201.

In some embodiments, the sealing member 3027 is arranged between the sliding slotted plate 3025 and the side wall 3024 in a moving direction S of the sliding slotted plate 3025, as shown in FIG. 10. Furthermore, the sealing member 3027 protrudes from the cover housing 3023 in a direction perpendicular to the moving direction S, so that when the panel cover 302 is mounted on the panel base 301, the sealing member 3027 may be in contact with the panel base 301to thereby provide sealing with a high degree of protection.

By providing the sealing member 3027 in the moving direction S which is in contact with the panel base 301 after being mounted, it is possible to effectively prevent foreign matter larger than, for example, 1 mm from entering the inside of the electric device 200 through the gap between the panel base 301 and the panel cover 302. In this way, the degree of protection of the panel assembly 300 is increased to IP40. It is therefore also possible to reduce the risk of failure of the electrical device 200.

In some embodiments, as shown in FIG. 10, the sealing member 3027 is zigzagged in the moving direction S. On the one hand, the zigzag-shaped structure may be retractable without hindering the movement of the sliding slotted plate 3025, and may provide a resilience force to some extent. On the other hand, the zigzag-shaped structure may increase the strength of the sealing member 3027 when it comes into contact with the panel base 301 to preventing the sealing member 3027 from being deformed too much to affect the sealing effect. In addition, the zigzag-shaped structure may also effectively increase the contact area, and further prevent foreign matter from entering the electrical device 200 from the gap between the panel base 301 and the panel cover 302.

It should be understood that the above-described embodiment about the zigzag-shaped sealing member 3027 is merely for illustration, without suggesting any limitations as to the scope of the present disclosure. Any other suitable structures or arrangements of sealing member 3027 are also possible. For example, in some embodiments, the sealing member 3027 may also be of a square wave structure, wavy structure or the like.

The sealing member 3027 may be made of any suitable material, for example, comprising, but not limited to, an elastomeric material such as rubber or silicone. The sealing member 3027 may be inserted into the sliding slotted plate 3025 by plugging as shown in FIG. 10. In some embodiments, the sealing member 3027 may also be coupled to the sliding slotted plate 3025 by any other suitable means, such as by screws or hook holes.

In some embodiments, a limiting member (referred to as a first limiting member 3015 for ease of discussion) is provided on the panel base 301. The sliding slotted plate 3027 is provided with a corresponding limiting member 3028 (referred to as a second limiting member 3028 for ease of discussion) at a position adjacent to one of the side walls 3024. The second limiting member 3028 is movable with the sliding slotted plate 3027 such that the second limiting member 3028 may be blocked by the first limiting member 3015 when the electrical device 200 is in the closed state.

On the one hand, the second limiting member 3028 being blocked by the first limiting member 3015 prevents the mounted panel cover 302 from being detached from the panel base 301 when the electrical device 200 is in the closed state. On the other hand, the panel cover 302 cannot be mounted on the panel base when the electrical device 200 is in the closed state. These all ensure the safe use of the electrical device 200 and the panel assembly 300. Certainly, it should be understood that the structure of the limiting members shown in the Figures is merely for illustration, without suggesting any limitation as to the scope of the present disclosure. Any other suitable structures or arrangements are possible.

It is described above that the panel assembly 300 for the electric device 200 achieves a high degree of protection and an effect of ease of installation with a simple structure, and can effectively prevent detachment or installation in case where the electric device 200 is closed, thereby increasing security. When the electrical device 200 is installed in the switch cabinet, in order to facilitate operation and improve safety, for example, the electronic device 200 needs to be opened before the cabinet door is opened, it is often necessary to provide a control handle outside the switch cabinet to operate the electrical device 200 therein.

The control handle may cooperate with an operation assembly coupled to the electrical device 200 via an extended rod to operate the electrical device 200. When the electrical device 200 is mounted in the switch cabinet facing towards the front, the conventional operation assembly comprises a front operation assembly that can dispose the control handle on the front of the switch cabinet and a lateral operation assembly that can dispose the control handle on the lateral side of the switch cabinet.

Due to design and installation requirements, it is sometimes necessary to interchange the lengthened control handles on the front side and on the lateral side of the switch cabinet. However, there is currently no independent conversion transmission mechanism that can achieve conversion between the front and lateral operation assemblies. Therefore, when the front operation assembly and the lateral operation assembly are interchanged, the operation assemblies need to be customized at the manufacturer, so that the interchange cannot be achieve on site. This deteriorates the progress and convenience of design and installation. In addition, the conventional lateral operation assembly cannot achieve the function of direct interchange between left and right operation assemblies.

A third aspect of the present disclosure provides an operation assembly 400 for the electrical device 200, which enables interchange between front and lateral operations as well as between left and right operations.

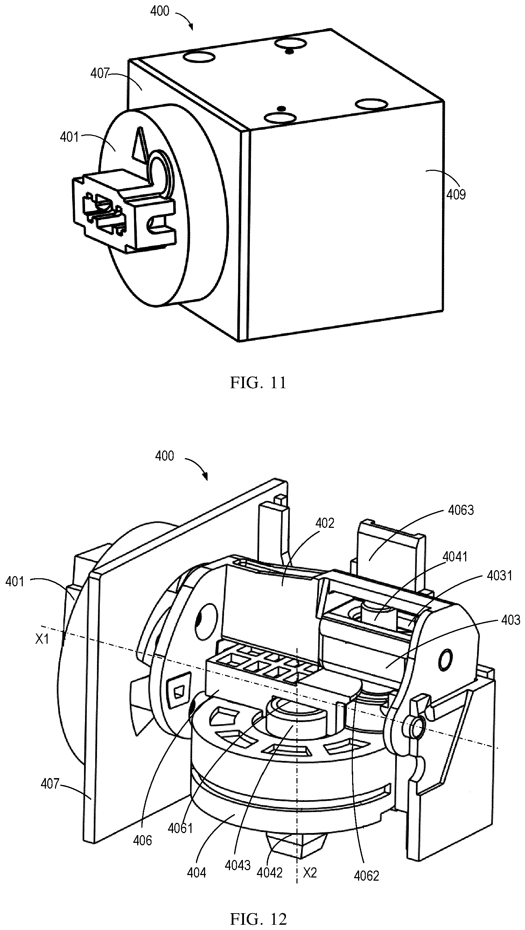

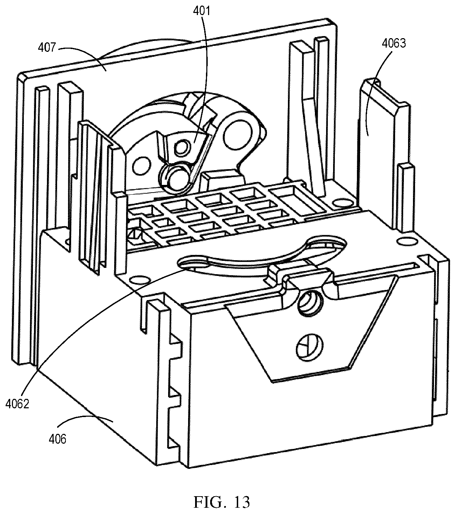

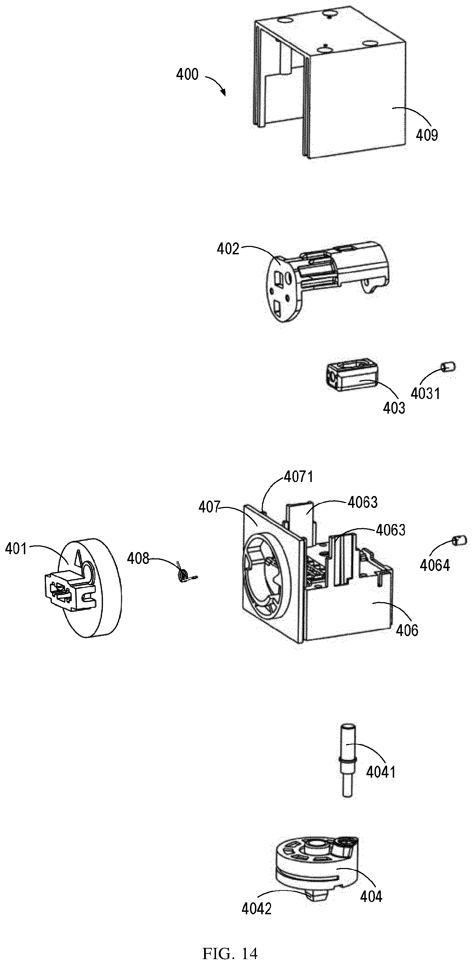

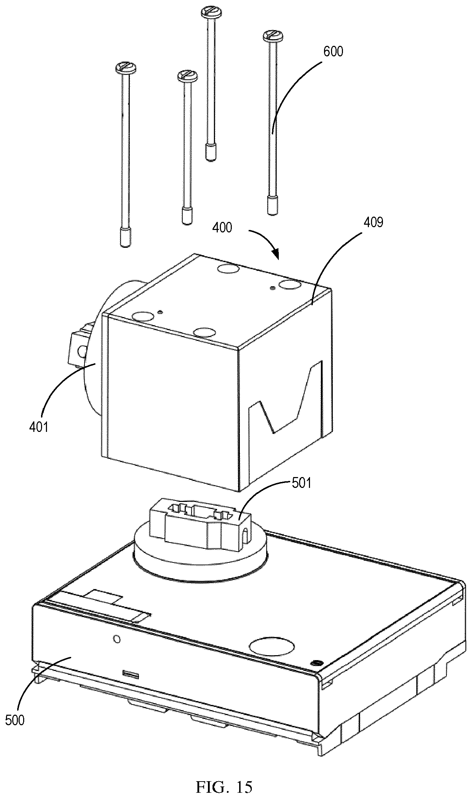

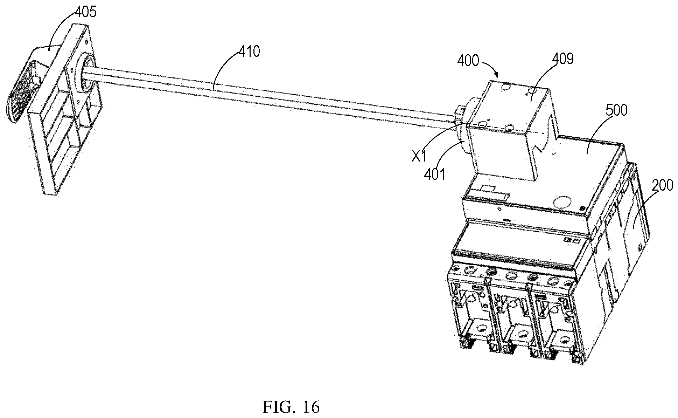

An improvement of the operation assembly 400 according to example embodiments of the present disclosure will be described in detail below with reference to FIGS. 11 to 16. FIG. 11 illustrates a perspective view of the operation assembly 400; FIG. 12 illustrates a perspective view of the operation assembly 400 whose housing 409 is removed and partial parts are cut off to facilitate display; FIG. 13 illustrates a perspective view of the operation assembly 400 whose housing is removed; FIG. 14 illustrates an exploded view of the operation assembly 400; FIG. 15 illustrates an exploded view of the operation assembly in an assembled state; and FIG. 16 illustrates a perspective view of the operation assembly 400 in an assembled state.

As shown in FIGS. 12, 13 and 14, in general, the operation assembly 400 according to embodiments of the present disclosure comprises an input member 401, a rotatable arm 402, a guide block 403 and an output member 404. The input member 401 may be coupled to the control handle 405 which is for example mounted on the exterior lateral side of the switch cabinet via an extended rod 410, and operated to rotate about an axis (referred to as a first axis X1 for ease of discussion), as shown in FIG. 16. Certainly, it should be understood that the installation manner as shown in FIG. 16 is merely for illustration, without suggesting any limitations as to the scope of the present disclosure. The input member 401 may also be coupled to any suitable operating member and operated to rotate about first axis X1.

The rotatable arm 402 is disposed on one side of the first axis X1 and protrudes from the input member 401 in a direction parallel to the first axis X1. And the rotatable arm 402 can rotate about the first axis X1 with the input member 401. The guide block 403 is pivotally arranged on the rotatable arm 402 and is rotatable about the first axis X1 in response to a rotation of the rotatable arm 402. The guide block 403 comprises a guide groove 4031 extending parallel to the first axis X1.

The output member 404 can be coupled directly or indirectly to the electrical device 200 and can be rotated about a pivot shaft 4043 which is perpendicular to the first axis X1. The output member 404 comprises a guide pin 4041 arranged eccentrically from the output member 404 and extending parallel to the pivot shaft 4043. The guide pin 4041 is slidably arranged in the guide groove 4031 to rotate about the first axis X1 with the guide block 403, thereby driving the output member 404 to rotate to operate the electric device 200.

The output member 404 may comprise a coupling portion 4042 that is coupled directly or indirectly to the electrical device 200, as shown in FIGS. 12 and 14. For example, as shown in FIGS. 14, 15 and 16, the coupling portion 4042 may be indirectly coupled to the electrical device 200 by being plugged to an indirect operating member 500. Further, as shown in FIG. 15, the operation assembly 400 may be mounted to the indirect operating member 500 or electrical device 200 by suitable fasteners, such as screws 600.

It will be appreciated that due to the guide pin 4041 that is plugged in and parallel to the pivot shaft 4043, the guide block 403 rotates about the first axis X1 in a constant posture. That is, the opening direction of the guide groove 4031 is always a direction parallel to the pivot shaft 4043. Since the rotatable arm 402 rotates about the first axis X1, there is a relative rotation between the guide block 403 and the rotatable arm 402 with a rotation axis being parallel to the first axis X1.

The guide block 403 may be pivotally coupled to the rotatable arm 402 in any suitable manner. For example, as shown in FIG. 14, both ends of the guide block 403 are coupled to the rotatable arm 402 via a pivot shaft pin 4031.

With the above compact structure, it is achieved that the operation handle 405 is perpendicular to the axis of rotation of the output member which directly or indirectly operates the electrical device 200, thereby enabling the front-mounted electrical device 200 to be operated from the lateral side. Furthermore, because the conversion between front side and lateral side is achieved by the motion transmission between the pivoting members, the operation assembly 400 may achieve interchange between left and right operation assemblies.

The operation assembly 400 according to embodiments of the present disclosure may be directly or indirectly mounted to the front-operated electrical device 200 for direct use. For example, in some embodiments, as shown in FIG. 15, its output member 404 may be coupled to electrical device 200 via the indirect operating member 500. For example, in some embodiments, the indirect operating member 500 may be a front operation assembly. Alternatively, in some embodiments, the output member 404 may also be directly coupled to electrical device 200.

Furthermore, on the one hand, the operational component 400 according to embodiments of the present disclosure may be coupled directly or indirectly to any electrical device to control its operational state. The electrical device for example comprises but is not limited to, a circuit breaker, contactors, an isolating switch, or any other electrical device that changes state by rotation. For example, for a circuit breaker, the circuit breaker may be closed or opened by rotating the input member 401.

On the other hand, the operation assembly 400 may be used by being directly or indirectly coupled to the electrical device 200 as a separate assembly, without the need for customization by the user. Therefore, the operation assembly 400 may be easily installed and used on site, improving the efficiency and safety of the electric device 200 during maintenance. In addition, as interchangeable use is enabled, costs and inventory management costs and so on are reduced, well meeting the market demand.

In some embodiments, the control handle 405 may also be a part of the operation assembly 400, which may be coupled to the input member 401 either directly or indirectly through the extended rod 410 to drive the input member 401 to rotate about the first axis X1. Thus, the operation assembly 400 can be used on more occasions with greater versatility.

As shown in FIGS. 12 and 14, in some embodiments, the operation assembly 400 further comprises a pivot frame 406 arranged between the rotatable arm 402 and the output member 404. The pivot frame 406 may pivotally receive the rotatable arm 402. For example, the rotatable arm 402 may be arranged on the pivot frame 406 with a pivot pin 4064. The pivot frame 406 further comprises a pivot hole 4061 for receiving the pivot shaft 4043 of the output member 404. The center of the pivot hole 4061 is coincides with the axis X2 of the pivot shaft 4043. The pivot frame 406 may also include an arc-shaped guide slot 4062, as shown in FIGS. 12 and 13. The center of the arc-shaped guide slot 4062 is on the axis X2 of the pivot shaft 4043. The guide pin 4041 is arranged in the guide groove 4031 through the arc-shaped guide slot 4062.

With the pivot frame 406 being provided, the rotatable arm 402 and the output member 404 may be rotated more stably, thereby improving the stability of the entire operation assembly 400 during the operation of the electrical device 200.

In some embodiments, as shown in FIG. 14, the operation assembly 400 further comprises a housing 409 and an operation cover 407 that are coupled to each other. The housing 409 may be generally of an inverted U-shaped configuration. Furthermore, a guide portion 4063 extends parallel to the pivot shaft 4043 on both sides of the outer wall of the pivot frame 406. The operation cover 407 is used for at least partially receiving the input member 401. The housing 409 may be mounted to the exterior of the pivot frame 406 along a slot in the guide portion 4063 to at least partially cover the rotatable arm 402, the guide block 403, and the output member 404.

As shown in FIG. 14, in some embodiments, the operation cover 407 may be pre-fastened with the pivot frame 406 or both of them are formed integrally. For example, the pivot frame 406 may be assembled with the operation cover 407 along the guiding and limiting structure 4071 on the operation cover 407. Such an arrangement can further reduce the number of fasteners for assembling to further facilitate the assembling of the operation assembly 400.

It should be understood that the above-described mounting manner of the housing 409 is merely for illustration, without suggesting any limitations as to the scope of the present disclosure. Housing 409 may also be mounted outside of pivot frame 406 in any other suitable manner. For example, in some embodiments, the housing 409 may be mounted by fasteners or snap-fit connections.

In some embodiments, a trip spring 408 may also be disposed between the input member 401 and the operation cover 407. After the electrical device 200 is controlled to be closed by controlling the input member 401, the trip spring 408 is in a compressed state. After the electrical device 200, such as a circuit breaker, trips for some reason, the input member 401 and the control handle 405 coupled thereto may be returned by the action of the trip spring 408, thereby enabling the input member 401 and the control handle 405 to indicate the correct state of the electrical device 200.

Although some specific embodiments of the present disclosure have already been displayed in detail by way of examples, those skilled in the art should appreciate that the above examples are only intended to exemplarily but non-restrictively limit the scope of the present disclosure. Those skilled in the art appreciate that the above embodiments may be modified without departing from the scope and essence of the present disclosure. The scope of the present disclosure is limited by the appended claims.

In the description and claims hereunder, unless otherwise additionally needed in the context, the terms "comprise" and "include" are understood as including the illustrated components or component groups, without excluding any other components or component groups.

Citations of any prior art in the description are not, and should not be considered as admitting to imply that these prior art constitute the common knowledge.

The present application discloses a panel assembly 300 for an electrical device 200, the panel assembly 300 comprising:
a panel base 301 adapted to be attached to the electrical device 200 and comprising a receiving groove 3011 and a limiting hook 3012; and
a panel cover 302 comprising a hanging hook 3021 and a limiting block 3022, the panel cover 302 being operable to be pivotally coupled to the panel base 301 by plugging the hanging hook 3021 into the receiving groove 3011, and the limiting block 3022 being operable to be limited by the limiting hook 3012 to mount the panel cover 302 on the panel base 301.

In an embodiment of the panel assembly 300, the panel base 301 further comprises a bottom plate 3013 and a spring 3014 arranged between the bottom plate 3013 and the limiting hook 3012,
wherein the limiting hook 3012 is operable to be pushed by the limiting block 3022 to slide and return under an action of the spring 3014 in case where the limiting block 3022 enters the limiting hook 3012.

In a further embodiment of the panel assembly 300 which can be combined with other embodiments, the panel cover 302 further comprises:
a cover housing 3023 comprising side walls 3024, the limiting block 3022 and the hanging hook 3021 being respectively disposed inside the side walls 3024 which are perpendicular to each other;
a sliding slotted plate 3025 arranged within the cover housing 3023 and comprising a through slot 3026 for receiving a handle 201 of the electrical device 200, the sliding slotted plate 3025 being operable to move relative to the cover housing 3023 with a swing of the handle 201; and
a sealing member 3027 arranged between the sliding slotted plate 3025 and the side wall 3024 along a moving direction S of the sliding slotted plate 3025, and the sealing member 3027 protruding from the cover housing 3023 to contact the panel base 301 to provide sealing when the panel cover 302 is mounted on the panel base 301.

In a further embodiment of the panel assembly 300 which can be combined with other embodiments, at least one of the following (a) to (c):
(a): the panel base 301 further comprises a first limiting member 3015;
(b): the sliding slotted plate 3025 further comprises a second limiting member 3028 arranged to slide with the sliding slotted plate 3025, such that the second limiting member 3028 can be blocked by the first limiting member 3015 in case where the electrical device 200 is closed;
(c): the sealing member 3027 is of a zigzagged shape in the moving direction S.

## Claims

1. A panel assembly (300) for an electrical device (200), comprising:
a panel base (301) adapted to be attached to the electrical device (200) and comprising a receiving groove (3011) and a limiting hook (3012); and
a panel cover (302) comprising a hanging hook (3021) and a limiting block (3022), the panel cover (302) being operable to be pivotally coupled to the panel base (301) by plugging the hanging hook (3021) into the receiving groove (3011), and the limiting block (3022) being operable to be limited by the limiting hook (3012) to mount the panel cover (302) on the panel base (301).

2. The panel assembly (300) of claim 1, wherein the panel base (301) further comprises a bottom plate (3013) and a spring (3014) arranged between the bottom plate (3013) and the limiting hook (3012),
wherein the limiting hook (3012) is operable to be pushed by the limiting block (3022) to slide and return under an action of the spring (3014) in case where the limiting block (3022) enters the limiting hook (3012).

3. The panel assembly (300) of claim 1 or 2, wherein the panel cover (302) further comprises:
a cover housing (3023) comprising side walls (3024), the limiting block (3022) and the hanging hook (3021) being respectively disposed inside the side walls (3024) which are perpendicular to each other;
a sliding slotted plate (3025) arranged within the cover housing (3023) and comprising a through slot (3026) for receiving a handle (201) of the electrical device (200), the sliding slotted plate (3025) being operable to move relative to the cover housing (3023) with a swing of the handle (201); and
a sealing member (3027) arranged between the sliding slotted plate (3025) and the side wall (3024) along a moving direction (S) of the sliding slotted plate (3025), and the sealing member (3027) protruding from the cover housing (3023) to contact the panel base (301) to provide sealing when the panel cover (302) is mounted on the panel base (301).

4. The panel assembly (300) of claim 2 or 3, wherein
the panel base (301) further comprises a first limiting member (3015); and
wherein the sliding slotted plate (3025) further comprises a second limiting member (3028) arranged to slide with the sliding slotted plate (3025), such that the second limiting member (3028) can be blocked by the first limiting member (3015) in case where the electrical device (200) is closed.

5. The panel assembly (300) of any of claims 2 to 4, wherein the sealing member (3027) is of a zigzagged shape in the moving direction (S).

## Patentansprüche

1. Paneelbaugruppe (300) für eine elektrische Vorrichtung (200), umfassend:
eine Paneelbasis (301), die so angepasst ist, dass sie an der elektrischen Vorrichtung (200) angebracht werden kann und eine aufnehmende Nut (3011) und einen limitierenden Haken (3012) umfasst; und
eine Paneelabdeckung (302), die einen Aufhängehaken (3021) und einen Begrenzungsblock (3022) umfasst, wobei die Paneelabdeckung (302) betreibbar ist, um schwenkbar mit der Paneelbasis (301) verbunden zu werden, indem der Aufhängehaken (3021) in die aufnehmende Nut (3011) gesteckt wird, und wobei der Begrenzungsblock (3022) betreibbar ist, um durch den Begrenzungshaken (3012) limitiert zu werden, um die Paneelabdeckung (302) an der Paneelbasis (301) anzubringen.

2. Paneelbaugruppe (300) nach Anspruch 1, wobei die Paneelbasis (301) ferner eine Bodenplatte (3013) und eine Feder (3014) umfasst, die zwischen der Bodenplatte (3013) und dem Begrenzungshaken (3012) angeordnet ist,
wobei der Begrenzungshaken (3012) so betrieben werden kann, dass er durch den Begrenzungsblock (3022) gedrückt wird, um unter der Wirkung der Feder (3014) zu gleiten und zurückzukehren, wenn der Begrenzungsblock (3022) in den Begrenzungshaken (3012) eintritt.

3. Die Paneelbaugruppe (300) nach Anspruch 1 oder 2, wobei die Plattenabdeckung (302) ferner umfasst:
ein Abdeckungsgehäuse (3023), das Seitenwände (3024) umfasst, wobei der Begrenzungsblock (3022) und der Aufhängehaken (3021) jeweils innerhalb der Seitenwände (3024) angeordnet sind, die senkrecht zueinander stehen;
eine gleitende geschlitzte Platte (3025), die innerhalb des Abdeckungsgehäuses (3023) angeordnet ist und einen Durchgangsschlitz (3026) zur Aufnahme eines Griffs (201) der elektrischen Vorrichtung (200) umfasst, wobei die gleitende geschlitzte Platte (3025) betreibbar ist, um sich relativ zu dem Abdeckungsgehäuse (3023) mit einer Schwenkung des Griffs (201) zu bewegen; und
ein Dichtungselement (3027), das zwischen der gleitenden geschlitzten Platte (3025) und der Seitenwand (3024) entlang einer Bewegungsrichtung (S) der gleitenden geschlitzten Platte (3025) angeordnet ist, und wobei das Dichtungselement (3027) von dem Abdeckungsgehäuse (3023) vorsteht, um die Paneelbasis (301) zu berühren, um eine Dichtung bereitzustellen, wenn die Plattenabdeckung (302) auf der Paneelbasis (301) montiert ist.

4. Die Paneelbaugruppe (300) nach Anspruch 2 oder 3, wobei
die Paneelbasis (301) ferner ein erstes limitierendes Element (3015) umfasst; und
wobei die gleitende geschlitzte Platte (3025) ferner ein zweites limitierendes Element (3028) umfasst, das so angeordnet ist, dass es mit der gleitenden geschlitzten Platte (3025) gleitet, so dass das zweite limitierende Element (3028) durch das erste limitierende Element (3015) blockiert werden kann, wenn die elektrische Vorrichtung (200) geschlossen ist.

5. Paneelbaugruppe (300) nach einem der Ansprüche 2 bis 4, wobei das Dichtungselement (3027) in der Bewegungsrichtung (S) eine Zickzackform aufweist.

## Revendications

1. Ensemble de panneau (300) pour un dispositif électrique (200), comprenant :
une base de panneau (301) adaptée pour être fixée au dispositif électrique (200) et comprenant une rainure de réception (3011) et un crochet de limitation (3012) ; et
un couvercle de panneau (302) comprenant un crochet de suspension (3021) et un bloc de limitation (3022), le couvercle de panneau (302) étant utilisable pour être couplé de manière pivotante à la base de panneau (301) en enfichant le crochet de suspension (3021) dans la rainure de réception (3011), et le bloc de limitation (3022) étant utilisable pour être limité par le crochet de limitation (3012) pour monter le couvercle de panneau (302) sur la base de panneau (301).

2. Ensemble de panneau (300) de la revendication 1, dans lequel la base de panneau (301) comprend en outre une plaque de fond (3013) et un ressort (3014) disposé entre la plaque de fond (3013) et le crochet de limitation (3012),
dans lequel le crochet de limitation (3012) est utilisable pour être poussé par le bloc de limitation (3022) pour glisser et revenir sous l'action du ressort (3014) dans le cas où le bloc de limitation (3022) entre dans le crochet de limitation (3012).

3. Ensemble de panneau (300) de la revendication 1 ou 2, dans lequel le couvercle de panneau (302) comprend en outre :
un logement de couvercle (3023) comprenant des parois latérales (3024), le bloc de limitation (3022) et le crochet de suspension (3021) étant respectivement disposés à l'intérieur des parois latérales (3024) qui sont perpendiculaires l'une à l'autre ;
une plaque coulissante à fente (3025) disposée à l'intérieur du logement de couvercle (3023) et comprenant une fente traversante (3026) pour recevoir une poignée (201) du dispositif électrique (200), la plaque coulissante à fente (3025) pouvant être actionnée pour se déplacer par rapport au logement de couvercle (3023) avec un balancement de la poignée (201) ; et
un élément d'étanchéité (3027) disposé entre la plaque coulissante à fentes (3025) et la paroi latérale (3024) le long d'une direction de déplacement (S) de la plaque coulissante à fentes (3025), et l'élément d'étanchéité (3027) faisant saillie du logement de couvercle (3023) pour entrer en contact avec la base de panneau (301) afin de fournir une étanchéité lorsque le couvercle de panneau (302) est monté sur la base de panneau (301).

4. Ensemble de panneau (300) de la revendication 2 ou 3, dans lequel
la base de panneau (301) comprend en outre un premier élément de limitation (3015) ; et
dans lequel la plaque coulissante à fentes (3025) comprend en outre un second élément de limitation (3028) agencé pour coulisser avec la plaque coulissante à fentes (3025), de sorte que le second élément de limitation (3028) peut être bloqué par le premier élément de limitation (3015) dans le cas où le dispositif électrique (200) est fermé.

5. Ensemble de panneau (300) de l'une quelconque des revendications 2 à 4, dans lequel l'élément d'étanchéité (3027) a une forme en zigzag dans la direction de déplacement (S).
